# EUROPEAN PATENT SPECIFICATION

(11) **EP 1 826 239 B1**
(45) Date of publication and mention of the grant of the patent: **26.08.2009**
(21) Application number: 07250823.7
(22) Date of filing: 28.02.2007
(51) Int. Cl.: C08L 43/04, C09D 157/00

(54) **Curable composition and coated article**
Härtbare Zusammensetzung und beschichteter Artikel
Composition durcissable et article revêtu

(30) Priority: 28.02.2006 JP 2006051759
(43) Date of publication of application: 29.08.2007
(73) Proprietor: Shin-Etsu Chemical Co., Ltd., Tokyo (JP); KABUSHIKI KAISHA TOYOTA JIDOSHOKKI, Kariya-shi, Aichi-ken (JP); Toyota Jidosha Kabushiki Kaisha, Toyota-shi, Aichi-ken, 471-8571 (JP)
(72) Inventor: Higuchi, Koichi, c/o Silicone-Electronics Materials, Annaka-shi Gunma-ken (JP); Yamaya, Masaaki, c/o Silicone-Electronics Materials, Annaka-shi Gunma-ken (JP); Muramatsu, Hisashi, Kariya-shi Aichi-ken (JP); Chigita, Koichi, Kariya-shi Aichi-ken (JP); Watanabe, Toshio, Toyota-shi Aichi-ken, 471-8571 (JP); Nagai, Takayuki, Toyota-shi Aichi-ken, 471-8571 (JP); Kondo, Toshiro, Toyota-shi Aichi-ken, 471-8571 (JP)
(74) Representative: Stoner, Gerard Patrick

(56) References cited:
- EP-A- 1 070 750
- EP-A- 1 408 082

## Description

This invention relates to a curable composition comprising a vinyl polymer having hydrolyzable silyl groups and/or SiOH groups and organic ultraviolet (UV) absorbing groups bonded to side chains, an organic UV absorber, and an organosilicon compound containing a nitrogen atom and an alkoxysilyl group in the molecule, and an article having the composition coated and cured to a substrate.

### BACKGROUND

As a substitute for transparent flat glass, transparent materials having non-shattering nature or greater shatter resistance than glass have been widely used in these years. For example, plastic substrates, especially polycarbonate resins, due to their excellent properties including transparency, impact resistance, and heat resistance, are currently used as structural members in place of glass, in various applications including windows in buildings and vehicles, meter covers and the like.

However, it is strongly desired to improve the surface properties of molded polycarbonate resins because their surface properties like mar resistance and weatherability are poor as compared with glass. Nowadays, polycarbonate resins intended for use as vehicle windows, road noise barriers or the like are desired to withstand weathering over ten years.

Known means for improving the weatherability of molded polycarbonate resins include lamination of an acrylic resin film having good weatherability to the surface of polycarbonate resin substrates, and provision of a UV absorber-containing resin layer on the polycarbonate resin surface by coextrusion or the like.

Also, known means for improving the mar resistance of molded polycarbonate resins include coating of thermosetting resins such as polyorganosiloxane and melamine resins and coating of polyfunctional acrylic photo-curable resins.

Further, a method of producing a transparent part having both weatherability and mar resistance is disclosed in JP-A 56-92059 and JP-A 1-149878. UV-absorbing transparent articles are known comprising a resin substrate, an undercoat layer having a large loading of UV absorber added, and a protective coating of a colloidal silica-laden polysiloxane coating composition formed on the undercoat layer.

However, the heavy loading of UV absorber into the undercoat layer gives rise to several problems. The heavy loading can adversely affect the adhesion of the undercoat layer to the underlying substrate or the overlying protective coating of a colloidal silica-laden polysiloxane coating composition. The UV absorber will escape from the undercoat composition via volatilization during heat curing step. On outdoor use over a long period of time, the UV absorber will gradually bleed out, exerting detrimental effects like cracking and whitening or yellowing. It is unacceptable from the standpoint of mar resistance to add a large amount of UV absorber to the colloidal silica-laden polysiloxane coating composition of which the overlying protective coating is made.

It is known from JP-A 8-151415 to form a protective coating on the surface of a synthetic resin or the like using a mixture of a benzotriazole or benzophenone-derived UV-absorbing vinyl monomer and a vinyl monomer copolymerizable therewith as a coating component. This protective coating, however, has only limited mar resistance since it is made of a vinyl polymer.

It is also known to form a coating on a resin substrate to produce a multilayer resin article using a copolymer of a benzotriazole or benzophenone-derived UV-absorbing vinyl monomer, an alkoxysilyl-containing vinyl monomer, and a vinyl monomer copolymerizable therewith as a coating component, the coating having adhesion to the resin substrate and imparting weatherability to the article. See Japanese Patent No. 3102696, JP-A 2001-047574, JP-A 2001-114841, and JP-A 2001-214122.

In these patents, coated articles having mar resistance and weatherability are manufactured by using a copolymer-containing composition to form an undercoat, and forming a colloidal silica-laden polysiloxane resin coating on the undercoat. These articles are noticeably improved in the adhesion of the polysiloxane resin coating and weatherability. Since the crosslinking network formation of alkoxysilyl groups in the undercoat does not proceed to a full extent, post-crosslinking of residual (or uncured) alkoxysilyl or hydroxysilyl groups can occur with the passage of time, inviting the likelihood of introducing strain to the coating and thus causing defects like cracks and delamination. That is, the coated articles are still insufficient in long-term weathering. In addition, when the coating is exposed to rapid changes of the ambient temperature, especially changes at relatively high temperature, the likelihood of crack occurrence by post-crosslinking is increased.

An aim herein is to provide new and useful curable compositions capable of forming a protective coating having good weatherability, and reducing or free from the drawbacks of delamination and yellowing on long-term use; also coated articles using such compositions.

The inventors have found that the above and other objects are attained by a curable composition comprising (A) a vinyl polymer having hydrolyzable Silyl groups and/or SiOH groups and organic UV absorbing groups bonded to side chains, (B) an organic UV absorber having a molecular weight of at least 500 and a weight retentivity of at least 95% when held at 150°C for 24 hours in an open state, and (C) an organosilicon compound containing a nitrogen atom and an alkoxysilyl group in the molecule. The composition is coated onto a substrate to form a UV-absorbing coating for thereby imparting long-term weatherability to the coated article. By further disposing a silicone hard resin coating on the composition coating, both long-term weatherability and mar resistance are imparted.

Specifically, the inventors made a study on a curable composition forming a coating capable of imparting long-term weatherability to molded parts of thermoplastic resins, typically polycarbonate. It has been found that if (A) a vinyl polymer having hydrolyzable silyl groups and/or SiOH groups and organic UV absorbing groups bonded to side chains and (C) an organosilicon compound containing a nitrogen atom and an alkoxysilyl group in the molecule are used as composition constituents, then siloxane crosslinking occurs therebetween to form a cured coating of dense three-dimensional siloxane crosslinked network. Then the free UV absorber (B) is fixed within the cured coating. Since the UV absorbing groups are available from this UV absorber and also on the side chains of the vinyl polymer (A), a significant amount of UV absorbing groups are incorporated in the coating. The crosslinked network coating also prevents the UV absorber from flowing out. The coating achieves a significant improvement in weatherability and maintains that function over a long term.

In addition, the migration of the UV absorber (B) to the coating surface is substantially prevented, eliminating an appearance whitening phenomenon and a loss of adhesion. The dissolution of the UV absorber into water, solvents or the like is prevented, so that the initial loading is maintained over a long term, preventing the UV-absorbing effect from declining with the passage of time. The UV absorber does not volatilize off from the coating during high-temperature treatment for curing.

It has also been found that if (B) an organic UV absorber having a molecular weight of at least 500 and a weight retentivity of at least 95% when held at 150°C for 24 hours in an open state is used as a composition constituent, then little of this UV absorber volatilizes off from the coating during high-temperature treatment for curing and little of the UV absorber leaches out or volatilizes off with the passage of time.

When aromatic rings are incorporated into the UV absorbing groups in component (A) and the UV absorber (B), interaction occurs therebetween, allowing the UV absorber (B) to be dispersed uniformly. This allows the coating to maintain its transparency even when a large amount of the organic UV absorber is included in the coating.

When an organopolysiloxane based hard protective coating layer is disposed on the coating of the curable composition of the invention, the hydrolyzable silyl groups and/or SiOH groups in the vinyl polymer (A) and the alkoxysilyl groups in the organosilicon compound (C) have reactivity with the organopolysiloxane based hard protective coating layer so that its adhesion is improved. The crosslinking of the hydrolyzable silyl groups and/or SiOH groups improves heat resistance and imparts good mar resistance and weathering resistance.

Accordingly, the present invention provides a curable composition capable of forming a weather-resistant protective coating and an article coated with the composition.
[1] A curable composition comprising (A) a vinyl polymer having hydrolyzable silyl groups and/or SiOH groups and organic UV absorbing groups bonded to side chains, (B) 2-[2-hydroxy-4-(1-octyloxycarbonylethoxy)phenyl]-4,6-bis(4-phenylphenyl)-1,3,5-triazine, as an organic UV absorber and (C) an organosilicon compound containing a nitrogen atom and an alkoxysilyl group in the molecule.
[2] The curable composition of [1] , wherein said organic UV absorbing group in said vinyl polymer (A) contains an aromatic ring.
[3] The curable composition of any one of [1] to [2], wherein said vinyl polymer (A) having hydrolyzable silyl groups and/or SiOH groups and organic UV absorbing groups bonded to side chains is obtained through copolymerization of monomeric components comprising (a) a vinyl monomer having a hydrolyzable silyl group and/or SiOH group bonded thereto through a C-Si bond, (b) a vinyl monomer having an organic UV absorbing group, and (c) another monomer copolymerizable therewith.
[4] An article comprising a substrate and a coating formed thereon by coating the curable composition of any one of [1] to [3] and curing through siloxane crosslinking.
[5] An article comprising a substrate, an undercoat formed on the substrate by coating and curing the curable composition of any one of [1] to [3], and a silicone hard coating disposed on the surface of the undercoat.

### BENEFITS

We find that curable compositions disclosed herein form a UV-absorbing protective coating having improved water resistance, solvent resistance and light resistance, because a significant amount of organic UV absorbing substance can be retained within the coating to improve light resistance, because siloxane crosslinking fixes the organic UV absorber within the coating for preventing the UV absorber from running out with the passage of time, and because the vinyl polymer undergoes siloxane crosslinking to form an organic/inorganic composite having weathering resistance, which serves as a binder. When the curable composition is coated and cured to a less weather-resistant article, the article is endowed with satisfactory weathering resistance while minimizing coloration or degradation of the article.

Plastic articles, typically polycarbonate resin articles, when coated with the curable composition of the invention, are endowed with improved weathering resistance while maintaining transparency. Further lamination of a polysiloxane hard coating on the coating enables to impart mar resistance and chemical resistance additionally. The coated articles thus find outdoor use as windows and windshields in transporting vehicles such as automobiles and aircraft, building windows, road noise barriers, and the like.

### FURTHER EXPLANATIONS; OPTIONS AND PREFERENCES

The singular forms "a," "an" and "the" include plural referents unless the context clearly dictates otherwise. The notation (Cn-Cm) means a group containing from n to m carbon atoms per group.

The curable composition of the invention comprises (A) a vinyl polymer having hydrolyzable silyl groups and/or SiOH groups and organic UV absorbing groups bonded to side chains, (B) an organic UV absorber having a molecular weight of at least 500 and a weight retentivity of at least 95% when held at 150°C for 24 hours in an open state, and (C) an organosilicon compound containing a nitrogen atom and an alkoxysilyl group in the molecule.

### Component A

The vinyl polymer (A) having hydrolyzable silyl groups and/or SiOH groups and organic UV absorbing groups bonded to side chains is not particularly limited as long gas a hydrolyzable silyl group and/or SiOH group is bonded to a vinyl polymer main chain through a Si-C bond and an organic UV absorbing group is also bonded to the vinyl polymer main chain. The vinyl polymer (A) may be obtained through copolymerization of monomeric components comprising (a) a vinyl monomer having a hydrolyzable silyl group and/or SiOH group bonded thereto through a C-Si bond, (b) a vinyl monomer having an organic UV absorbing group, and (c) another monomer copolymerizable therewith.

The vinyl monomer (a) having a hydrolyzable silyl group and/or SiOH group bonded thereto through a Si-C bond is not particular limited as long as it has at least one vinyl-polymerizable functional group and at least one hydrolyzable silyl group and/or SiOH group in the molecule.

Suitable vinyl-polymerizable functional groups include organic groups of 2 to 12 carbon atoms containing vinyl, vinyloxy, (meth)acryloxy or (α-methyl)styryl group. Illustrative examples include vinyl, 5-hexenyl, 9-decenyl, vinyloxymethyl, 3-vinyloxypropyl, (meth)acryloxymethyl, 3-(meth)acryloxypropyl, 11-(meth)acryloxyundecyl, vinylphenyl (or styryl), isopropenylphenyl (or α-methylstyryl), and vinylphenylmethyl (or vinylbenzyl). Inter alia, (meth)acryloxypropyl is preferred for reactivity and availability.

Suitable hydrolyzable groups include alkoxy groups such as methoxy, ethoxy, propoxy, isopropoxy, butoxy, isobutoxy, sec-butoxy, and tert-butoxy, acyloxy groups such as phenoxy and acetyloxy, oxime groups such as butanoxime, amino groups such as amino and methylamino, and halogen groups such as chloro. Inter alia, alkoxy groups such as methoxy and ethoxy are preferred for easy control of hydrolysis and availability.

Substituent groups other than the foregoing include alkyl groups such as methyl, ethyl, propyl, hexyl and decyl, and phenyl groups. Methyl is preferred for availability.

Illustrative examples of the vinyl monomer (a) having a hydrolyzable silyl group and/or SiOH group bonded thereto through a C-Si bond include methacryloxymethyltrimethoxysilane, methacryloxypropyltrimethoxysilane, methacryloxyundecyltrimethoxysilane, methacryloxypropylmethyldimethoxysilane, methacryloxypropyldimethylmethoxysilane, methacryloxypropyltriethoxysilane, acryloxypropyltrimethoxysilane, acryloxypropylmethyldimethoxysilane, acryloxypropyldimethylmethoxysilane, acryloxypropyltriethoxysilane, acryloxymethyltrimethoxysilane, acryloxyundecyltrimethoxysilane, vinyltrimethoxysilane, vinyltriethoxysilane, vinylmethyldimethoxysilane, allyltrimethoxysilane, styryltrimethoxysilane, styrylmethyldimethoxysilane, and styryltriethoxysilane. Of these, methacryloxypropyltrimethoxysilane, methacryloxypropylmethyldimethoxysilane, methacryloxypropyldimethylmethoxysilane, acryloxypropyltrimethoxysilane, and acryloxypropylmethyldimethoxysilane are preferred for availability, ease of handling, crosslinking density and reactivity.

The vinyl monomer (a) having a hydrolyzable silyl group and/or SiOH group bonded thereto through a C-Si bond is preferably present in a range of 1 to 50% by weight, more preferably 3 to 40% by weight of the copolymer composition. With less than 1 wt%, formation of siloxane network due to crosslinking between alkoxy groups may be insufficient, failing to prevent the UV absorber (B) from migrating to the surface or flowing out or to improve the heat resistance and durability of a coating. In excess of 50 wt%, the coating may become hard due to an increased crosslinking density, causing such drawbacks as a decline of adhesion, retention of more unreacted hydrolyzable groups or SiOH groups, post-crosslinking with the passage of time, and crack occurrence.

The vinyl monomer (b) having an organic UV absorbing group is not particularly limited as long as the monomer contains a UV absorbing group and a vinyl polymerizable group in the molecule. In order that the organic UV absorber (B) be effectively dispersible, the UV absorbing group in the vinyl monomer (b) should preferably contain an aromatic ring.

Suitable vinyl monomers having an organic UV absorbing group include (meth)acrylic monomers having a UV absorbing group in the molecule, and specifically, benzotriazole compounds of the general formula (1) and benzophenone compounds of the general formula (2), shown below. 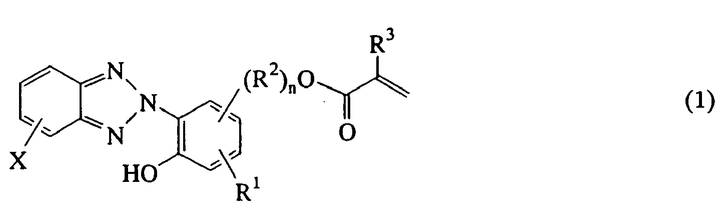 Herein X is hydrogen or chlorine; R¹ is hydrogen, methyl, or a tertiary C₄-C₈ alkyl group; R² is a straight or branched C₂-C₁₀ alkylene group; R³ is hydrogen or methyl; and n is 0 or 1. 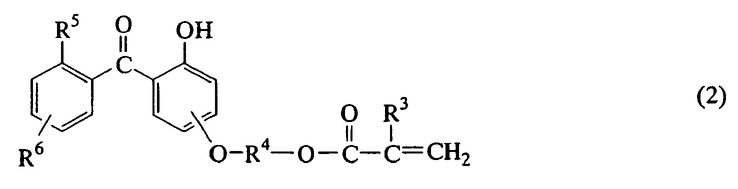 Herein R³ is as defined above; R⁴ is a substituted or unsubstituted, straight or branched C₂-C₁₀ alkylene group; R⁵ is hydrogen or hydroxyl; and R⁶ is hydrogen, hydroxyl or a C₁-C₆ alkoxy group.

In formula (1), suitable tertiary C₄-C₈ alkyl groups represented by R¹ include tert-butyl, tert-pentyl, tert-hexyl, tert-heptyl, tert-octyl, and di-tert-octyl. Suitable straight or branched C₂-C₁₀ alkylene groups represented by R² include ethylene, trimethylene, propylene, tetramethylene, 1,1-dimethyltetramethylene, butylene, octylene, and decylene.

In formula (2), suitable straight or branched C₂-C₁₀ alkylene groups represented by R⁴ are the same as exemplified for R² or substituted forms thereof in which some hydrogen atoms are substituted by halogen atoms. Suitable alkoxy groups represented by R⁶ include methoxy, ethoxy, propoxy, and butoxy.

Illustrative, non-limiting examples of the benzotriazole compounds of formula (1) include 2-(2'-hydroxy-5'-(meth)acryloxyphenyl)-2H-benzotriazole, 2-(2'-hydroxy-3'-tert-butyl-5'-(meth)acryloxymethylphenyl)-2H-benzotriazole, 2-[2'-hydroxy-5'-(2-(meth)acryloxyethyl)phenyl]-2H-benzotriazole, 2-[2'-hydroxy-3'-tert-butyl-5'-(2-(meth)acryloxyethyl)-phenyl]-5-chloro-2H-benzotriazole, and 2-[2'-hydroxy-3'-methyl-5'-(8-(meth)acryloxyoctyl)phenyl]-2H-benzotriazole.

Illustrative, non-limiting examples of the benzophenone compounds of formula (2) include 2-hydroxy-4-(2-(meth)acryloxyethoxy)benzophenone, 2-hydroxy-4-(4-(meth)acryloxybutoxy)benzophenone, 2,2'-dihydroxy-4-(2-(meth)acryloxyethoxy)benzophenone, 2,4-dihydroxy-4'-(2-(meth)acryloxyethoxy)benzophenone, 2,2',4-trihydroxy-4'-(2-(meth)acryloxyethoxy)benzophenone, 2-hydroxy-4-(3-(meth)acryloxy-2-hydroxypropoxy)benzophenone, and 2-hydroxy-4-(3-(meth)acryloxy-1-hydroxypropoxy)-benzophenone.

The preferred UV-absorbing vinyl monomers are benzotriazole compounds of formula (1), with 2-[2'-hydroxy-5'-(2-(meth)acryloxyethyl)phenyl]-2H-benzotriazole being most preferred. The UV-absorbing vinyl monomers may be used alone or in admixture.

The vinyl monomer (b) having an organic UV-absorbing group is preferably used in a range of 1 to 30% by weight, and more preferably 3 to 25% by weight of the copolymer composition. Less than 1 wt% of the vinyl monomer (b) may fail to achieve the desired weatherability and be less effective in dispersing the organic UV absorber (B). Amounts in excess of 30 wt% may reduce the adhesion of the coating or cause defective appearance such as whitening to the coating.

The other monomer (c) copolymerizable with the foregoing monomer (a) or (b) is not particularly limited as long as it is copolymerizable. Suitable examples include (meth)acrylic monomers having a cyclic hindered amine structure, (meth)acrylates, (meth)acrylonitriles, (meth)acrylamides, alkyl vinyl ethers, alkyl vinyl esters, styrene, and derivatives thereof.

Illustrative, non-limiting examples of the (meth)acrylic monomers having a cyclic hindered amine structure include 2,2,6,6-tetramethyl-4-piperidinyl methacrylate and 1,2,2,6,6-pentamethyl-4-piperidinyl methacrylate. These light stabilizers may be used alone or in admixture.

Illustrative, non-limiting examples of the (meth)acrylates and derivatives thereof include (meth)acrylic esters of monohydric alcohols such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, n-pentyl (meth)acrylate, isopentyl (meth)acrylate, n-hexyl (meth)acrylate, isohexyl (meth)acrylate, n-heptyl (meth)acrylate, isoheptyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-undecyl (meth)acrylate, n-dodecyl (meth)acrylate, lauryl (meth)acrylate, palmityl (meth)acrylate, stearyl (meth)acrylate, cyclohexyl (meth)acrylate, 4-methylcyclohexyl (meth)acrylate, 4-t-butylcyclohexyl (meth)acrylate, isobornyl (meth)acrylate, dicyclopentanyl (meth)acrylate, dicyclopentenyloxyethyl (meth)acrylate, and benzyl (meth)acrylate; (meth)acrylic esters of alkoxy(poly)alkylene glycol such as 2-methoxyethyl (meth)acrylate, 2-methoxypropyl (meth)acrylate, 3-methoxypropyl (meth)acrylate, 2-methoxybutyl (meth)acrylate, 3-methoxybutyl (meth)acrylate, 4-methoxybutyl (meth)acrylate, methoxypolyethylene glycol (meth)acrylate (the number of ethylene glycol units being 2 to 20, for example), and methoxypolypropylene glycol (meth)acrylate (the number of propylene glycol units being 2 to 20, for example); mono(meth)acrylic esters of polyhydric alcohols such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, glycerin mono(meth)acrylate, pentaerythritol mono(meth)acrylate, polyethylene glycol mono(meth)acrylate (the number of ethylene glycol units being 2 to 20, for example), and polypropylene glycol mono(meth)acrylate (the number of propylene glycol units being 2 to 20, for example); poly(meth)acrylic esters of polyhydric alcohols such as ethylene glycol di(meth)acrylate, propylene glycol di(meth)acrylate, butylene glycol di(meth)acrylate, glycerin di(meth)acrylate, glycerin tri(meth)acrylate, pentaerythritol di(meth)acrylate, pentaerythritol tetra(meth)acrylate, 1,4-cyclohexane diol di(meth)acrylate, polyethylene glycol di(meth)acrylate (the number of ethylene glycol units being 2 to 20, for example), and polypropylene glycol di(meth)acrylate (the number of propylene glycol units being 2 to 20, for example); (poly)esters of non-polymeric polybasic acids with hydroxylalkyl (meth)acrylates such as mono[2-(meth)acryloyloxyethyl] succinate, di[2-(meth)acryloyloxyethyl] succinate, mono[2-(meth)acryloyloxyethyl] adipate, di[2-(meth)acryloyloxyethyl] adipate, mono[2-(meth)acryloyloxyethyl] phthalate, and di[2-(meth)acryloyloxyethyl] phthalate; amino-containing (meth)acrylates such as 2-aminoethyl (meth)acrylate, 2-(N-methylamino)ethyl (meth)acrylate, 2-(N,N-dimethylamino)ethyl (meth)acrylate, 2-(N-ethylamino)ethyl (meth)acrylate, 2-(N,N-diethylamino)ethyl (meth)acrylate, 3-(N,N-dimethylamino)propyl (meth)acrylate, and 4-(N,N-dimethylamino)butyl (meth)acrylate; and epoxy-containing (meth)acrylic esters such as glycidyl (meth)acrylate.

Examples of suitable (meth)acrylonitrile derivatives include α-chloroacrylonitrile, α-chloromethylacrylonitrile, α-trifluoromethylacrylonitrile, α-methoxyacrylonitrile, α-ethoxyacrylonitrile, and vinylidene cyanide. Examples of suitable (meth)acrylamide derivatives include N-methyl(meth)acrylamide, N,N-dimethyl(meth)acrylamide, N-ethyl(meth)acrylamide, N,N-diethyl(meth)acrylamide, N-methoxy(meth)acrylamide, N,N-dimethoxy(meth)acrylamide, N-ethoxy(meth)acrylamide, N,N-diethoxy(meth)acrylamide, diacetone(meth)acrylamide, N-methylol(meth)acrylamide, N-(2-hydroxyethyl)(meth)acrylamide, N,N-dimethylaminomethyl(meth)acrylamide, N-(2-dimethylamino)ethyl(meth)acrylamide, N,N'-methylenebis(meth)acrylamide, and N,N'-ethylenebis(meth)acrylamide.

Examples of suitable alkyl vinyl ethers include methyl vinyl ether, ethyl vinyl ether, butyl vinyl ether, and hexyl vinyl ether. Examples of suitable alkyl vinyl esters include vinyl formate, vinyl acetate, vinyl acrylate, vinyl butyrate, vinyl caproate, and vinyl stearate. Examples of styrene and derivatives thereof include styrene, α-methylstyrene and vinyltoluene.

Of the foregoing monomers, (meth)acrylates are preferred. More preferred are methyl (meth)acrylate, ethyl (meth)acrylate, isopropyl (meth)acrylate, n-butyl (meth)acrylate, isobutyl (meth)acrylate, n-hexyl (meth)acrylate, 2-ethylhexyl (meth)acrylate, isononyl (meth)acrylate, lauryl (meth)acrylate, cyclohexyl (meth)acrylate, 4-methylcyclohexyl (meth)acrylate, 4-t-butylcyclohexyl (meth)acrylate, isobornyl (meth)acrylate, dicyclopentanyl (meth)acrylate, dicyclopentenyloxyethyl (meth)acrylate, and the like.

The other copolymerizable monomers (c) may be used alone or in admixture of two or more.

The other copolymerizable monomer (c) is preferably present in a range of 20 to 98% by weight, more preferably 25 to 95% by weight of the copolymer composition.

In the vinyl polymer (A), copolymerization reaction of the vinyl monomer (a) having a hydrolyzable silyl group and/or SiOH group bonded thereto through a C-Si bond, the vinyl monomer (b) having an organic UV absorbing group, and the other copolymerizable monomer (c) may be carried out by adding a radical polymerization initiator to a solution of these monomers, and heating the solution. The initiator is selected from peroxides such as dicumyl peroxide and benzoyl peroxide and azo compounds such as azobisisobutyronitrile.

The vinyl polymer should preferably have a weight average molecular weight (Mw) of 1,000 to 300,000, more preferably 5,000 to 250,000, as measured by gel permeation chromatography (GPC) versus polystyrene standards.

### Component B

Another essential component in the curable composition of the invention is (B) an organic UV absorber comprising 2-[2-hydroxy-4-(1-octyloxycarbonylethoxy)phenyl]-4,6-bis(4-phenylphenyl)-1,3,5-triazine and having a molecular weight of at least 500 and a weight retentivity of at least 95% when held at 150°C for 24 hours in an open state. No particular limits are imposed on the organic UV absorber (B) as long as it comprises 2-[2-hydroxy-4-(1-octyloxycarbonylethoxy)phenyl]-4,6-bis(4-phenylphenyl)-1,3,5-triazine, has a molecular weight of at least 500, preferably 550 to 100,000 and a weight retentivity of at least 95%, preferably at least 96%, when held at 150°C for 24 hours in an open state. In view of its dispersion in a cured coating, the absorber should preferably contain an aromatic ring in its structure.

Suitable UV absorbers include triazole compounds and triazine compounds, examples of which include 2,4-bis(2,4-dimethylphenyl)-6-(2-hydroxy-4-isooctyloxyphenyl)-1,3,5-triazine, 2-[4-[(2-hydroxy-3-dodecyloxypropyl)oxy]-2-hydroxyphenyl]-4,6-bis(2,4-dimethylphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-[4-[(2-hydroxy-3-(2'-ethyl)hexyl)oxy]-2-hydroxyphenyl]-4,6-bis(2,4-dimethylphenyl)-1,3,5-triazine, 2,4-bis(2-hydroxy-4-butyloxyphenyl)-6-(2,4-bisbutyloxyphenyl)-1,3,5-triazine, β-[3-(2H-benzotriazol-2-yl)-4-hydroxy-5-tert-butylphenyl]-propionic acid poly(ethylene glycol)(300) ester, bis{β-[3-(2H-benzotriazol-2-yl)-4-hydroxy-5-tert-butylphenyl]-propionic acid} poly(ethylene glycol)(300) ester, 2,2'-methylene-bis[4-(1,1,3,3-tetramethylbutyl)-6-[(2H-benzotriazol-2-yl)phenol]], (co)polymers of 2-hydroxy-4-(2-acryloxyethoxy)benzophenone, and (co)polymers of 2-(2'-hydroxy-5'-methacryloxyethylphenyl)-2H-benzotriazole.

Of these organic UV absorbers, triazine derived UV absorbers are preferred. More preferred are 2,4-bis(2,4-dimethylphenyl)-6-(2-hydroxy-4-isooctyloxyphenyl)-1,3,5-triazine, 2-[4-[(2-hydroxy-3-dodecyloxypropyl)oxy]-2-hydroxyphenyl]-4,6-bis(2,4-dimethylphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-[4-[(2-hydroxy-3-(2'-ethyl)hexyl)oxy]-2-hydroxyphenyl]-4,6-bis(2,4-dimethylphenyl)-1,3,5-triazine, and 2,4-bis(2-hydroxy-4-butyloxyphenyl)-6-(2,4-bisbutyloxyphenyl)-1,3,5-triazine.

The organic UV absorbers may be used alone or in admixture.

In the curable composition of the invention, the vinyl polymer (A) having a hydrolyzable silyl group and/or SiOH group and an organic UV absorbing group bonded to side chains and the organic UV absorber (B) are preferably combined such that 0.1 to 50 parts by weight, more preferably 1 to 30 parts by weight of the organic UV absorber (B) is present per 100 parts by weight of the vinyl polymer (A). If more than 50 pbw of the organic UV absorber (B) is added, the curable composition may have too low a crosslinking density so that a coating layer thereof has a lower hardness and becomes less effective for preventing the organic UV absorber from volatilizing off or running out. In addition, the coating layer can have a whitened outer appearance, and poor adhesion to the underlying substrate or the overlying polysiloxane coating. If the amount of the organic UV absorber (B) added is less than 0.1 pbw, the resulting coating may absorb less UV, failing to provide the desired weatherability.

### Component C

A further essential component is (C) an organosilicon compound containing a nitrogen atom and an alkoxysilyl group in the molecule. The inclusion of the nitrogen and alkoxysilyl-containing organosilicon compound has several advantages. First, it imparts water resistant adhesion to a coating layer of the curable composition. Secondly, the coating is densified since the organosilicon compound forms crosslinks with the hydrolyzable silyl groups and/or SiOH groups in the vinyl polymer (A). Thirdly, the nitrogen atom in the organosilicon compound promotes such crosslinking reactions for reducing the amount of residual alkoxysilyl groups within the coating layer, restraining cracks due to post-crosslinking with the passage of time, and effectively fixing the UV absorber (B) and optional light stabilizer or the like within the coating layer.

The preferred organosilicon compounds (C) are compounds containing at least one nitrogen atom and at least one alkoxysilyl group in the molecule, more preferably compounds containing at least one nitrogen atom and at least two alkoxysilyl groups in the molecule. Suitable organosilicon compounds include an amino-containing alkoxysilane, amino-containing di(alkoxysilane), amide-containing alkoxysilane, an amidated form of the reaction product of an amino-containing alkoxysilane with an epoxy-containing alkoxysilane and a silylating agent, the reaction product of an amino-containing alkoxysilane with a dicarboxylic anhydride, the reaction product of an amino-containing alkoxysilane with a (poly)(meth)acrylic compound, the reaction product of an amino-containing alkoxysilane with a (meth)acrylic group-containing alkoxysilane, the reaction product of a polyamine compound with a (meth)acrylic group-containing alkoxysilane, an amidated form of the reaction product of an amino-containing alkoxysilane with a polyisocyanate compound, and (poly)silane compound containing an isocyanurate ring. Of these, preference is given to the amidated form of the reaction product of an amino-containing alkoxysilane with an epoxy-containing alkoxysilane and a silylating agent, and the reaction product of an amino-containing alkoxysilane with a dicarboxylic anhydride.

Examples of the reactants used herein are given below. Suitable amino-containing alkoxysilanes include 3-aminopropyltrimethoxysilane, 3-aminopropyltriethoxysilane, 3-aminopropylmethyldimethoxysilane, 3-aminopropylmethyldiethoxysilane, N-(2-aminoethyl)-3-aminopropyltrimethoxysilane, N-(2-aminoethyl)-3-aminopropyltriethoxysilane, N-(2-aminoethyl)-3-aminopropylmethyldimethoxysilane, N-(2-aminoethyl)-3-aminopropylmethyldiethoxysilane, 3-(trimethoxysilylpropyl)aminopropyltrimethoxysilane, 3-(triethoxysilylpropyl)aminopropyltriethoxysilane, 2-(trimethoxysilylpropyl)aminoethyl-3-aminopropyltrimethoxysilane, 2-(triethoxysilylpropyl)aminoethyl-3-aminopropyltriethoxysilane, N-phenyl-3-aminopropyltrimethoxysilane, N-vinylbenzyl-3-aminopropyltriethoxysilane, and hydrochloride salts thereof.

A typical amino-containing di(alkoxysilane) is bis(trimethoxysilylpropyl)amine.

Suitable amide-containing alkoxysilanes include ureidopropyltrimethoxysilane, ureidopropyltriethoxysilane, ureidopropylmethyldimethoxysilane, and ureidopropylmethyldiethoxysilane.

Suitable dicarboxylic anhydrides include maleic anhydride, phthalic anhydride, tetrahydrophthalic anhydride, hexahydrophthalic anhydride, methyl-substituted tetrahydrophthalic anhydride, methyl-substituted hexahydrophthalic anhydride, 3,6-endomethylene-tetrahydrophthalic anhydride, and methyl-substituted-3,6-endomethylene-tetrahydrophthalic anhydride.

Suitable (poly)(meth)acrylic compounds include alkyl methacrylates such as methyl methacrylate, butyl methacrylate, and 2-ethylhexyl methacrylate, alkyl acrylates such as methyl acrylate, ethyl acrylate, and butyl acrylate, acrylamide, acrylonitrile, and ethylene glycol dimethacrylate.

Suitable polyamine compounds include ethylene diamine, diethylene triamine, triethylene triamine, tetraethylene pentamine, and piperazine.

Suitable polyisocyanate compounds include toluene diisocyanate, diphenyl methane diisocyanate, hexamethylene diisocyanate, 2,2,4-trimethylhexamethylene diisocyanate, 2,4,4-trimethylhexamethylene diisocyanate, p-phenylene diisocyanate, 4,4'-dicyclohexylmethane diisocyanate, 3,3'-dimethyldiphenyl-4,4'-diisocyanate, dianisidine diisocyanate, m-xylene diisocyanate, isophorone diisocyanate, 1,5-naphthalene diisocyanate, trans-1,4-cyclohexyl diisocyanate, lysine diisocyanate, dimethyltriphenylmethane tetraisocyanate, triphenylmethane triisocyanate, and tris(isocyanatophenyl) thiophosphate.

Suitable (meth)acrylic group-containing alkoxysilanes include the exemplary compounds illustrated above for the acrylic monomer having an alkoxysilyl group.

Suitable isocyanurate ring-containing silanes include tris(trimethoxysilylpropyl) isocyanurate, bis(trimethoxysilylpropyl)allyl isocyanurate, and tris(triethoxysilylpropyl) isocyanurate.

The amidated form of the reaction product of an amino-containing alkoxysilane with an epoxy-containing alkoxysilane and a silylating agent may be prepared by the following method. Examples of the amino-containing alkoxysilane used herein are as exemplified above, with N-(2-aminoethyl)-3-aminopropyltrimethoxysilane and N-(2-aminoethyl)-3-aminopropylmethyldimethoxysilane being preferred for adhesion and operation. The epoxy-containing alkoxysilane used herein is not particularly limited, with γ-glycidoxypropyltrimethoxysilane, γ-glycidoxypropylmethyldimethoxysilane, and β-(3,4-epoxycyclohexyl)ethylmethyldimethoxysilane being preferred for reactivity and operation. Examples of the silylating agent used herein include hexamethyldisilazane, N,N'-bis(trimethylsilyl)formamide, and N,N'-bis(trimethylsilyl)urea. The silylating agent serves to protect the OH group resulting from the reaction of an amino-containing alkoxysilane with an epoxy-containing alkoxysilane and to prevent the OH group from reacting with an alkoxysilyl group for thereby preventing the reaction product from changing with time.

The reaction of an amino-containing alkoxysilane with an epoxy-containing alkoxysilane and a silylating agent may be carried out by adding dropwise the epoxy-containing alkoxysilane to a mixture of the amino-containing alkoxysilane and the silylating agent and heating the system, or by reacting the amino-containing alkoxysilane with the epoxy-containing alkoxysilane and adding the silylating agent to the reaction product.

In this reaction, the amino-containing alkoxysilane and the epoxy-containing alkoxysilane are preferably combined such that the molar ratio of epoxy groups to amino groups (=N-H) may fall in a range from 0.3 to 1.2. If the molar ratio of epoxy/amino is less than 0.3, a less number of alkoxy groups per molecule may participate in crosslinking so that curability is weak, and the spread of overall molecule is contracted to weaken a surface bonding ability and exacerbate adhesion. If the ratio exceeds 1.2, there may be left few =N-H groups which are available during the subsequent amidation step, exacerbating water-resistant adhesion.

This component is an amidated form of the reaction product. Amidation may be performed by reacting the reaction product with an acid halide, acid anhydride or acid isopropenyl ester derived from carboxylic acid such as acetic chloride, acetic bromide, propionic chloride, acetic anhydride, isopropenyl acetate, and benzoyl chloride.

The reaction product of an amino-containing alkoxysilane with a dicarboxylic anhydride may be prepared by the following method. Examples of the amino-containing alkoxysilane used herein are as exemplified above, with 3-aminopropyltrimethoxysilane, 3-aminopropyltriethoxysilane, and 3-aminopropylmethyldiethoxysilane being preferred for adhesion and stability.

Examples of the dicarboxylic anhydride used herein are as exemplified above. Preferred for adhesion and stability are tetrahydrophthalic anhydride, hexahydrophthalic anhydride, methyl-substituted tetrahydrophthalic anhydride, methyl-substituted hexahydrophthalic anhydride, 3,6-endomethylene-tetrahydrophthalic anhydride, and methyl-substituted-3,6-endomethylene-tetrahydrophthalic anhydride.

The reaction of an amino-containing alkoxysilane with a dicarboxylic anhydride may be carried out by adding dropwise the amino-containing alkoxysilane to the dicarboxylic anhydride and allowing them to react, or inversely, by adding dropwise the dicarboxylic anhydride to the amino-containing alkoxysilane and allowing them to react.

In this reaction, the amino-containing alkoxysilane and the dicarboxylic anhydride are preferably combined such that the molar ratio of amino groups (-NH₂) to dicarboxylic anhydride may fall in a range from 0.3 to 1.8. If the molar ratio of amino/acid anhydride is less than 0.3, a less number of alkoxy groups in the reaction product may participate in crosslinking, leading to poor curability and weak adhesion. If the ratio exceeds 1.8, the shelf stability of the undercoating composition can be degraded due to amino groups available from unreacted amino-containing alkoxysilane.

### Optional components

In the curable composition of the invention, other components may be added if desired.

In the curable composition, a thermoplastic vinyl resin may be included for imparting flexibility to a curable composition coating and suppressing a phase change or softening phenomenon of a curable composition coating in response to changes of the ambient temperature, especially in a relatively high temperature range. This, in turn, suppresses strain within the curable composition coating and at the interface between the coating and the overlying layer, and as a result, prevents the overlying layer, typically organopolysiloxane based protective coating from cracking. Additionally, the thermoplastic resin imparts heat resistance and water resistance to the curable composition itself.

The thermoplastic resin may be compounded in an amount of 0 to 50 parts by weight per 100 parts by weight of effective components in the curable composition and when used, preferably in an amount of 1 to 50 parts by weight. More than 50 pbw of the thermoplastic resin can reduce the crosslinking density of a coating, resulting in a reduced hardness and failing to prevent the organic UV absorber (B) from surface migration, volatilization and run-out.

To the curable composition of the invention, a light stabilizer having at least one cyclic hindered amine structure or hindered phenol structure in the molecule may be added. The inclusion of the light stabilizer improves weatherability. The light stabilizer used herein should preferably be dissolvable in the solvent used in the curable composition, compatible with the curable composition, and low volatile.

Illustrative examples of the light stabilizer include 3-dodecyl-1-(2,2,6,6-tetramethyl-4-piperidinyl)pyrrolidine-2,5-dione, N-methyl-3-dodecyl-1-(2,2,6,6-tetramethyl-4-piperidinyl)-pyrrolidine-2,5-dione, N-acetyl-3-dodecyl-1-(2,2,6,6-tetramethyl-4-piperidinyl)-pyrrolidine-2,5-dione, bis(2,2,6,6-tetramethyl-4-piperidyl) sebacate, bis(1,2,2,6,6-pentamethyl-4-piperidyl) sebacate, tetrakis(2,2,6,6-tetramethyl-4-piperidyl) 1,2,3,4-butanetetracarboxylate, tetrakis(1,2,2,6,6-pentamethyl-4-piperidyl) 1,2,3,4-butanetetracarboxylate, condensates of 1,2,3,4-butanetetracarboxylic acid, 2,2,6,6-tetramethyl-piperidinol and tridecanol, 8-acetyl-3-dodecyl-7,7,9,9-tetramethyl-1,3,8-trisazaspiro-[4,5]decane-2,4-dione, condensates of 1,2,3,4-butanetetracarboxylic acid, 1,2,6,6-pentamethyl-4-piperidinol and β,β,β,β'-tetramethyl-3,9-(2,4,8,10-tetraoxaspiro[5,5]undecane)diethanol, and condensates of 1,2,3,4-butanetetracarboxylic acid, 2,2,6,6-pentamethyl-4-piperidinol and β,β,β,β'-tetramethyl-3,9-(2,4,8,10-tetraoxaspiro[5,5]undecane)diethanol. Also useful are light stabilizers modified with silyl for the purpose of fixing the light stabilizer as disclosed in JP-B 61-56187, for example, 2,2,6,6-tetramethylpiperidino-4-propyltrimethoxysilane, 2,2,6,6-tetramethylpiperidino-4-propylmethyldimethoxysilane, 2,2,6,6-tetramethylpiperidino-4-propyltriethoxysilane, 2,2,6,6-tetramethylpiperidino-4-propylmethyldiethoxysilane, and (partial) hydrolyzates thereof. These light stabilizers may be used alone or in admixture.

The light stabilizer may be compounded in an amount of 0 to 10 parts by weight per 100 parts by weight of effective components in the curable composition and when used, preferably in an amount of 1 to 10 parts by weight. More than 10 pbw of the light stabilizer can reduce the adhesion of a coating.

To the curable composition of the invention, a UV absorber other than the organic UV absorber (B) may be added insofar as this does not adversely affect the composition. Organic UV absorbers compatible with the curable composition are preferred. Derivatives of compounds having a hydroxybenzophenone, benzotriazole, cyanoacrylate or triazine main skeleton are more preferred. Vinyl polymers having such UV absorbers on side chains are also useful. Illustrative examples include 2,4-dihydroxybenzophenone, 2,2',4,4'-tetrahydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-n-benzyloxybenzophenone, 2,2'-dihydroxy-4,4'-dimethoxybenzophenone, 2,2'-dihydroxy-4,4'-diethoxybenzophenone, 2,2'-dihydroxy-4,4'-dipropoxybenzophenone, 2,2'-dihydroxy-4,4'-dibutoxybenzophenone, 2,2'-dihydroxy-4-methoxy-4'-propoxybenzophenone, 2,2'-dihydroxy-4-methoxy-4'-butoxybenzophenone, 2,3,4-trihydroxybenzophenone, 2-(2-hydroxy-5-methylphenyl)benzotriazole, 2-(2-hydroxy-5-t-octylphenyl)benzotriazole, 2-(2-hydroxy-3,5-di-t-butylphenyl)benzotriazole, ethyl-2-cyano-3,3-diphenyl acrylate, 2-ethylhexyl-2-cyano-3,3-diphenyl acrylate, and 2-(2-hydroxy-4-hexyloxyphenyl)-4,6-diphenyltriazine. These UV absorbers may be used in admixture.

Moreover, a microparticulate functional metal oxide may be added to the curable composition insofar as this does not adversely affect the composition. The preferred metal oxide is one which is compatible with and dispersible in the curable composition, and when a coating is formed from the composition, maintains the coating at a certain level of transparency without clouding. Examples include titanium oxide, cerium oxide, zinc oxide, tin oxide, zirconium oxide, antimony oxide, tungsten oxide, antimony-containing tin oxide, tin-containing indium oxide, iron oxide, silica, and alumina, alone or composite metal oxide fine particles, and mixtures thereof.

The microparticulate metal oxide may be compounded in an amount of 0 to 30 parts by weight per 100 parts by weight of effective components in the curable composition and when used, preferably in an amount of 1 to 30 parts by weight. More than 30 pbw can reduce the transparency of a coating.

If desired, the curable composition is diluted with a solvent prior to use. Suitable solvents include diacetone alcohol, propylene glycol monomethyl ether, ethylene glycol monomethyl ether, propylene glycol monoethyl ether, ethylene glycol monoethyl ether, isobutyl alcohol, isopropyl alcohol, n-butyl alcohol, n-propyl alcohol, acetone, methyl ethyl ketone, methyl isobutyl ketone, acetylacetone, ethyl acetate, butyl acetate, xylene, and toluene. As a general rule, the curable composition is preferably diluted with the solvent into a solution at a concentration of 5 to 20% by weight of effective components prior to use.

For smoothening a coating, an effective amount of a fluorochemical or silicone surfactant may be added. Also for promoting the cure of a coating, a catalytic amount of a crosslinking curing catalyst may be added.

On use, the curable composition solution is coated onto the surface of a previously cleaned substrate such as plastic film, and held at room temperature or heated for evaporating off the dilution solvent, forming a coating having a thickness of 0.5 to 20 µm, preferably 1 to 15 µm. Coatings of less than 0.5 µm thick may fail to provide the desired weatherability. Coatings in excess of 20 µm thick may interfere with coating operation and adversely affect the resin substrate's own mechanical and optical properties.

When the solvent is evaporated off by heating, the preferred heating continues in a range from room temperature to the heat resistant temperature of the substrate, more preferably in a range of 50 to 140°C for 1 minute to 3 hours, more preferably 5 minutes to 2 hours.

The coating technique is not particularly limited. Useful techniques which can be used herein include roll coating, dip coating, flow coating, bar coating, spray coating, and spin coating.

Also contemplated herein is a coated plastic article comprising a plastic film or substrate and a cured coating of the inventive curable composition disposed thereon. The coated article has improved properties including initial adhesion, heat resistance, hot water resistance, and weatherability. An overcoat layer may be disposed on the curable composition coating by applying any well-known organopolysiloxane composition, for example, a hydrolyzate or co-hydrolyzate of one or more organooxysilane having the general formula (3):

(R⁷)ₘSi(OR⁸)₄₋ₘ (3)

wherein R⁷ is a C₁-C₁₀ organic group, R⁸ is hydrogen or a monovalent organic group, and m is 0, 1 or 2, and heat curing, preferably at 50 to 140°C for 5 minutes to 3 hours. Since the molded plastic article has the inventive curable composition coated thereon, this coating and the overlying organopolysiloxane act in a synergistic fashion, offering good adhesion and wear resistance. They prevent the UV absorber from volatilizing or running out of the curable composition coating, offering good weatherability and weathering stability.

The organopolysiloxane composition is preferably coated so as to provide a coating thickness of 0.2 to 20 µm, more preferably 0.5 to 15 µm after heat curing. Too thin coatings may fail to provide the desired hardness and wear resistance. Too thick coatings may crack after curing. The coating technique is not particularly limited. Useful techniques which can be used herein include roll coating, dip coating, flow coating, bar coating, spray coating, and spin coating.

In formula (3), suitable organic groups represented by R⁷ are substituted or unsubstituted, monovalent hydrocarbon groups of 1 to 10 carbon atoms, for example, alkyl, aryl, halogenated alkyl, halogenated aryl, alkenyl groups, and substituted forms of these hydrocarbon groups in which some hydrogen atoms are substituted by epoxy, (meth)acryloxy, mercapto, amino, or cyano groups. Also included are organic groups which are separated by a heteroatom such as O, NH or NCH₃. Illustrative examples include alkyl groups such as methyl, ethyl, propyl, isopropyl, butyl, hexyl, decyl, and cyclohexyl; aryl groups such as phenyl and phenethyl; halogenated alkyl groups such as 3-chloropropyl, 3,3,3-trifluoropropyl, and 3,3,4,4,5,5,6,6,6-nonafluorohexyl; halogenated aryl groups such as p-chlorophenyl; alkenyl groups such as vinyl, allyl, 9-decenyl, and p-vinylbenzyl; epoxy-containing organic groups such as 3-glycidoxypropyl, β-(3,4-epoxycyclohexyl)ethyl, and 9,10-epoxydecyl; (meth)acryloxy-containing organic groups such as γ-methacryloxypropyl and γ-acryloxy; mercpto-containing organic groups such as γ-mercaptopropyl and p-mercaptomethylphenylethyl; amino-containing organic groups such as γ-aminopropyl and (β-aminoethyl)-γ-aminopropyl; and cyano-containing organic groups such as β-cyanoethyl.

R⁸ is hydrogen or a monovalent organic group of 1 to 10 carbon atoms, examples of which include alkyl, alkenyl, alkoxyalkyl, and acyl groups, with the alkyl and acyl groups being preferred. Examples include methyl, ethyl, propyl, isopropyl, butyl, hexyl, phenyl, isopropenyl, methoxyethyl, and acetyl.

Illustrative examples of the silane compounds satisfying the above requirements include
trialkoxysilanes or triacyloxysilanes such as methyltrimethoxysilane, methyltriethoxysilane, methyltris(2-methoxyethoxy)silane, methyltriacetoxysilane, methyltripropoxysilane, methyltriisopropenoxysilane, methyltributoxysilane, ethyltrimethoxysilane, ethyltriethoxysilane, vinyltrimethoxysilane, vinyltriethoxysilane, vinyltriacetoxysilane, vinyltris(2-methoxyethoxy)silane, vinyltriisopropenoxysilane, phenyltrimethoxysilane, phenyltriethoxysilane, phenyltriacetoxysilane, γ-chloropropyltrimethoxysilane, γ-chloropropyltriethoxysilane, γ-chloropropyltripropoxysilane, 3,3,3-trifluoropropyltrimethoxysilane, γ-glycidoxypropyltrimethoxysilane, γ-glycidoxypropylmethyldimethoxysilane, γ-glycidoxypropyltriethoxysilane, γ-glycidoxypropylmethyldiethoxysilane, β-(3,4-epoxycyclohexyl)ethyltrimethoxysilane, β-(3,4-epoxycyclohexyl)ethylmethyldimethoxysilane, β-(3,4-epoxycyclohexyl)ethyltrimethoxysilane, β-(3,4-epoxycyclohexyl)ethylmethyldiethoxysilane, γ-methacryloxypropyltrimethoxysilane, γ-acryloxypropyltrimethoxysilane, γ-aminopropyltrimethoxysilane, γ-aminopropyltriethoxysilane, γ-mercaptopropyltrimethoxysilane, γ-mercaptopropyltriethoxysilane, N-(β-aminoethyl)-γ-aminopropyltrimethoxysilane, and β-cyanoethyltrimethoxysilane;
dialkoxysilanes or diacyloxysilanes such as dimethyldimethoxysilane, dimethyldiethoxysilane, dimethyldi(2-methoxyethoxy)silane, dimethyldiacetoxysilane, dimethyldipropoxysilane, dimethyldiisopropenoxysilane, dimethyldibutoxysilane, vinylmethyldimethoxysilane, vinylmethyldiethoxysilane, vinylmethyldiacetoxysilane, vinylmethyldi(2-methoxyethoxy)silane, vinylmethyldiisopropenoxysilane, phenylmethyldimethoxysilane, phenylmethyldiethoxysilane, phenylmethyldiacetoxysilane, γ-propylmethyldimethoxysilane, γ-propylmethyldiethoxysilane, γ-propylmethyldipropoxysilane, 3,3,3-trifluoropropylmethyldimethoxysilane, γ-methacryloxypropylmethyldimethoxysilane, γ-acryloxypropylmethyldimethoxysilane, γ-aminopropylmethyldimethoxysilane, γ-aminopropylmethyldiethoxysilane, γ-mercaptopropylmethyldimethoxysilane, γ-mercaptopropylmethyldiethoxysilane, N-(β-aminoethyl)-γ-aminopropylmethyldimethoxysilane, and β-cyanoethylmethyldimethoxysilane;
tetraalkoxysilanes such as methyl silicate, ethyl silicate, N-propyl silicate, n-butyl silicate, sec-butyl silicate, and t-butyl silicate; and
bissilanes such as bis(trimethoxysilyl)ethane, bis(trimethoxysilyl)hexane, bis(trimethoxysilyl)decane, bis(triethoxysilyl)hexane, bis(trimethoxysilyl)benzene, and bis(trimethoxysilyloxydimethylsilyl)benzene.

One or more of these silane compounds may be used and subjected to (co)hydrolysis, and (co)hydrolyzates of these silane compounds may be used alone or in admixture.

The (co)hydrolyzate of the foregoing silane compound may be obtained by adding water to a lower alcohol solution of the silane compound and effecting hydrolysis in the presence of an acid catalyst. Suitable lower alcohols include methanol, ethanol, isopropanol, and butanol. A solvent can be used in combination with the alcohol, and examples of such solvent include ketones such as acetone and acetylacetone, esters such as ethyl acetate and isobutyl acetate, and ethers such as propylene glycol monomethyl ether, dipropylene glycol monomethyl ether and diisopropyl ether.

To the organopolysiloxane composition, a colloidal silica in the form of a dispersion of silica fine particles of 1 to 100 nm dispersed in water or an alcohol (e.g., methanol, ethanol, isobutanol, propylene glycol monomethyl ether) may be added in an amount of 5 to 70% by weight. Coating of this colloidal silica-laden organopolysiloxane composition is more preferable because of a further improvement in mar resistance.

The addition of colloidal silica may be carried out either by simply adding it to the organopolysiloxane composition or by premixing it with the silane compound and effecting hydrolysis. Alternatively, in the case of a water-dispersed colloidal silica, the water in the water-dispersed colloidal silica may be utilized as part or the entirety of water necessary for the hydrolysis of the silane compound whereby the hydrolysis is effected.

A UV absorber can be added to the organopolysiloxane composition. Exemplary inorganic UV absorbers which can be added include titanium oxide, cerium oxide, zinc oxide, tin oxide, zirconium oxide, antimony oxide, tungsten oxide, antimony-containing tin oxide, tin-containing indium oxide, iron oxide, silica, and alumina, alone or composite metal oxide fine particles, and mixtures thereof; metal chelates of titanium, zinc, zirconium or the like, and (partial) hydrolyzates and condensates thereof. Exemplary organic UV absorbers which can be added include derivatives of compounds having a hydroxybenzophenone, benzotriazole, cyanoacrylate or triazine main skeleton, and (co)polymers, typically vinyl polymers, having such UV absorbers on side chains.

To the organopolysiloxane composition, a curing catalyst may be added in a catalytic amount. Suitable curing catalysts include quaternary ammonium salts, alkali metal salts of organic acids, alkoxides or chelates of aluminum, titanium, chromium or iron, perchlorate salts, acid anhydrides, polyamines, and Lewis acids.

The curable composition of the invention is applicable to a variety of plastic materials, typically polycarbonate resins, polystyrene resins, (meth)acrylic resins, urethane resins, thiourethane resins, polycondensates of halogenated bisphenol A and ethylene glycol, acrylic urethane resins, halogenated aryl-containing acrylic resins, sulfur-containing resins, and composite laminates including two or more layers of these resins.

Plastic materials coated with silicone hard coatings can be advantageously used as optical members because of their excellent optical properties.

### EXAMPLE

Synthesis Examples, Examples, and Comparative Examples are given below for further illustrating the invention although the invention is not limited thereto. In Examples, all parts (pbw) and percents are by weight. The viscosity is measured at 25°C in accordance with JIS Z8803. The weight average molecular weight (Mw) is determined by gel permeation chromatography (GPC) versus polystyrene standards.

### [Synthesis of (A) vinyl polymer having hydrolyzable silyl groups and/or SiOH groups and organic UV absorbing groups bonded to side chains]

### Synthesis Example 1

A 2-L flask equipped with a stirrer, condenser and thermometer was charged with 152 g of diacetone alcohol as a solvent and heated at 80°C under a nitrogen stream. To the flask, a 240-g portion of a previously prepared monomer mix solution (containing 67 g of 2-[2'-hydroxy-5'-(2-methacryloxyethyl)phenyl]-2H-benzotriazole under the trade name of RUVA-93 from Otsuka Chemical Co., Ltd., 45 g of γ-methacryloxypropyltrimethoxysilane, 315 g of methyl methacrylate, 23 g of glycidyl methacrylate, and 350 g of diacetone alcohol), and a 54-g portion of a previously prepared solution of 2.3 g of 2,2'-azobis(2-methylbutyronitrile) as a polymerization initiator in 177.7 g of diacetone alcohol were added in sequence. The solution was allowed to react at 80°C for 30 minutes, after which the remainder of the monomer mix solution and the remainder of the initiator solution were simultaneously added dropwise at 80-90°C over 1.5 hours. Stirring continued at 80-90°C for a further 5 hours.

The thus obtained vinyl polymer having trimethoxysilyl groups and organic UV absorbing groups bonded to side chains had a viscosity of 5,050 mPa-s. This copolymer contained 15% of the UV-absorbing monomer and 10% of the vinyl monomer having a trimethoxysilyl group bonded to a side chain via a C-Si bond. It had a Mw of 60,600 as measured by GPC versus polystyrene standards. This vinyl polymer in solution form is designated A-1.

### Synthesis Examples 2 and 3 and Comparative Synthesis Examples 1 and 2

Vinyl polymers A-2, 3 and comparative vinyl polymers RA-1, 2 were prepared as in Synthesis Example 1 in accordance with the monomer formulation and amount shown in Table 1.

### [Synthesis of organosilicon compound containing a nitrogen atom and a hydrolyzable silyl group in the molecule]

### Synthesis Example 4

A 2-L flask equipped with a stirrer, condenser and thermometer was charged with 222 g of N-2-(aminoethyl)-3-aminopropyltrimethoxysilane and 242 g of hexamethyldisilazane as a silylating agent. Under a nitrogen stream, the flask was heated to 120°C, to which 496 g of γ-glycidoxypropylmethyldiethoxysilane was added dropwise for reaction. The reaction solution was heated and stirred at 120°C for 5 hours, after which a low boiling fraction was removed at 100°C under a reduced pressure, obtaining 862 g of a viscous compound having a viscosity of 1,387 mPa-s.

Next, a 2-L flask equipped with a stirrer, condenser and thermometer was charged with 862 g of the reaction product and 862 g of toluene. Under a nitrogen stream, 143 g of acetic anhydride was added dropwise to the solution at room temperature. The reaction solution was heated and stirred at 110° C for 2 hours, after which 141 g of methanol was added dropwise to the reaction solution at 50°C. The reaction solution was heated and stirred at 50°C for 1 hour, after which a low boiling fraction was removed at 100°C under a reduced pressure, obtaining a red brown, clear, highly viscous compound.

The compound was analyzed by IR absorption spectroscopy, observing no absorption peaks attributable to OH or NH group in the region equal to or greater than 3,000 cm⁻¹, but a sharp absorption peak attributable to amide group at 1,650 cm⁻¹.

The compound was diluted with propylene glycol monomethyl ether (PGM) to a nonvolatile concentration of 25% (JIS K6833). It is a solution of nitrogen and alkoxysilyl-containing compound, designated C-1.

### Synthesis Example 5

A 2-L flask equipped with a stirrer, condenser and thermometer was charged with 178 g of methyl-3,6-endomethylene-1,2,3,6-tetrahydrophthalic anhydride and 399 g of ethanol. Under a nitrogen stream, the flask was cooled below 10°C, to which 221 g of 3-aminopropyltriethoxysilane was added dropwise for reaction. The reaction solution was stirred for 5 hours at room temperature, combined with 798 g of ethanol, and stirred at room temperature for 1 hour. There was obtained 1,588 g of a red brown, clear compound solution having a nonvolatile content of 20% (JIS K6833) and a viscosity of 2.85 mm²/s. This compound having a nitrogen atom and an alkoxysilyl group in the molecule in solution form is designated C-2.

### [Synthesis of colloidal silica-laden organopolysiloxane composition]

### Synthesis Example 6

A 1-L flask equipped with a stirrer, condenser and thermometer was charged with 336 g of methyltriethoxysilane and 94 g of isobutanol. To the solution which was stirred under ice cooling and kept below 5°C, 283 g of water-dispersed colloidal silica (Snowtex O, Nissan Chemical Industries Ltd., average particle size 15-20 nm, SiO₂ content 20%) below 5°C was added. The mixture was stirred under ice cooling for 3 hours and at 20-25°C for a further 12 hours, after which 27 g of diacetone alcohol and 50 g of propylene glycol monomethyl ether were added. Then 3 g of a 10% sodium propionate aqueous solution and 0.2 g of a polyether-modified silicone KP-341 (Shin-Etsu Chemical Co., Ltd.) as a leveling agent were added, followed by adjustment to pH 6-7 with acetic acid. It was diluted with isobutanol to a nonvolatile content of 20% (JIS K6833) and aged at room temperature for 5 days, yielding a colloidal silica-laden organopolysiloxane composition having a viscosity of 4.2 mm²/s and a Mw of 1,100. This colloidal silica-laden organopolysiloxane composition is designated HC-1.

### Synthesis Example 7

A 2-L flask equipped with a stirrer, condenser and thermometer was charged with 328 g of methyltrimethoxysilane and 10 g of 3,3,3-trifluoropropyltrimethoxysilane. To the solution which was stirred and kept at 20°C, 98 g of water-dispersed colloidal silica (Snowtex O, Nissan Chemical Industries Ltd., average particle size 15-20 nm, SiO₂ content 20%) and 230 g of 0.25N acetic acid were added. The mixture was stirred for 3 hours and at 60°C for a further 3 hours, after which 300 g of cyclohexanone was added. The by-product methanol was distilled off under atmospheric pressure. Then 400 g of isopropanol, 134 g of an isopropanol solution of 0.25% tetrabutylammonium hydroxide, and 0.5 g of a polyether-modified silicone KP-341 (Shin-Etsu Chemical Co., Ltd.) as a leveling agent were added. There was yielded a colloidal silica-laden organopolysiloxane composition having a viscosity of 4.3 mm²/s and a Mw of 2,300. This colloidal silica-laden organopolysiloxane composition is designated HC-2.

**Table 1**

| Composition of vinyl polymer (A) having alkoxysilyl groups and organic UV absorbing groups bonded to side chains (unit: pbw) | | | | | |
|---|---|---|---|---|---|
| | Synthesis Example | | | Comparison | |
| | 1 | 2 | 3 | 1 | 2 |
| Vinyl polymer | A-1 | A-2 | A-3 | RA-1 | RA-2 |
| MPTMS | 45 | 25 | 90 | 45 | |
| RUVA-1 | 67 | 45 | | | 67 |
| RUVA-2 | | | 112 | | |
| MMA | 315 | 285 | 243 | 382 | 355 |
| GMA | 23 | 45 | | 23 | 23 |
| EA | | 23 | | | |
| VIAc | | 22 | | | |
| MHALS | | 5 | 5 | | 5 |
| Total charge | 450 | 450 | 450 | 450 | 450 |

| | | | | | |
|---|---|---|---|---|---|
| MPTMS: γ-methacryloxypropyltrimethoxysilane RUVA-1: 2-[2'-hydroxy-5'-(2-methacryloxyethyl)phenyl]-2H-benzotriazole under the trade name of RUVA-93 from Otsuka Chemical Co., Ltd. RUVA-2: 2-hydroxy-4-(2-acryloxyethyl)benzophenone under the trade name of BP-1A from Osaka Organic Chemical Industry, Ltd. MMA: methyl methacrylate GMA: glycidyl methacrylate EA: ethyl acrylate VIAc: vinyl acetate MHALS: 1,2,2,6,6-pentamethyl-4-piperidyl methacrylate | | | | | |

Below, exemplary curable compositions are given for further illustrating the invention. While many abbreviations are used in Examples and Comparative Examples, those which have not described in Synthesis Examples have the following meaning.

### <Thermoplastic resin>

- Pol-C:: 40% diacetone alcohol solution of poly(methyl methacrylate) resin, Dianal® BR-80, Mitsubishi Rayon Co., Ltd.

### <Organic UV absorber>

- UVA-1:: 2,2',4,4'-tetrahydroxybenzophenone
Molecular weight: 246
Weight retentivity on 150°C/24 hr/open holding: 86%
- UVA-2:: 2-[2-hydroxy-4-(1-octyloxycarbonylethoxy)phenyl]-4,6-bis(4-phenylphenyl)-1,3,5-triazine (Tinuvin 479, Ciba Specialty Chemicals,
Molecular weight: 678
Weight retentivity on 150°C/24 hr/open holding: 98%
- UVA-3:: 10% diacetone alcohol solution of a copolymer of 2-(2'-hydroxy-5'-methacryloxyethylphenyl)-2H-benzotriazole (30%) and methyl methacrylate (70%), PUVA-30M, Otsuka Chemical Co., Ltd.
Mw: 10,000
Weight retentivity on 150°C/24 hr/open holding (after removal of diacetone alcohol solvent at 100°C in vacuum): 97%

### <Inorganic UV absorber>

- UVA-4:: 10% isobutanol dispersion of microparticulate cerium oxide, U-100, Tagi Chemical Co., Ltd.

### <Hindered amine light stabilizer>

- HALS-1:: N-acetyl-3-dodecyl-1-(2,2,6,6-tetramethyl-4-piperidinyl)pyrrolidine-2,5-dione (Sandbar 3058Liq, Clariant)

The measurement of physical properties and evaluation were carried out by the following methods.

Tests for evaluation were carried out on a single film obtained by coating and curing the curable composition to a substrate, and on a layer laminate obtained by coating and curing the curable composition (also referred to as undercoat) to a substrate and then coating, curing and laminating a colloidal silica-laden organopolysiloxane composition thereon.

### (1) Initial coating appearance

For both the single film of curable composition and the laminate of the curable composition layer and the organopolysiloxane composition layer, the appearance of the coating was visually observed.

### (2) Primary adhesion

A cross-hatch adhesion test was carried out according to JIS K5400 by scribing a test sample with a cutting edge along six (each) longitudinal and transverse lines spaced apart 2 mm to define 25 square sections, closely attaching a commercial pressure-sensitive adhesive tape, and rapidly peeling the adhesive tape at 90°. The number (X) of sections retained without peeling is counted and expressed as X/25.

### (3) Water resistance and water-resistant adhesion,

A test sample was immersed in boiling water for 2 hours, after which the outer appearance was visually observed and the cross-hatch adhesion test was carried out as in (2).

### (4) Mar resistance

The Taber abrasion test was carried out according to ASTM D1044 (Taber abrader, CS-10F wheel, 500 gram load, 500 cycles). Haze was measured prior to the test and after the test. Mar resistance (%) is the haze after the test minus the haze prior to the test.

### (5) Weathering test

Using the Eye-Super UV tester of Iwasaki Electric Co., Ltd., a weathering test in which each cycle consists of [black panel temperature 63°C, relative humidity 50%, irradiance 50 mW/cm², wet 10 sec/hour, 5 hours] and [black panel temperature 30°C, relative humidity 95%, 1 hour] was repeated for 250 hours and 500 hours. Prior to and after the weathering test, yellowing index was measured according to JIS K7103. The weathering resistant coating was observed for cracks and separation by the naked eyes and under a microscope (magnifying power x250).

### Crack

The outer appearance of the coating after the weathering test was evaluated according to the following criterion.
○: intact
Δ: some cracks
×: cracks over the entire coating

### Separation

The state of the coating after the weathering test was evaluated according to the following criterion.
○: intact
Δ1: partial separation between the organopolysiloxane layer and the undercoat layer
Δ2: partial separation between the undercoat layer and the substrate
×1: entire separation between the organopolysiloxane layer and the undercoat layer
×2: entire separation between the undercoat layer and the substrate

### Examples 1-4 and Comparative Examples 1-4

The compositions blended in accordance with the formulation shown in Tables 2 and 3 were diluted with a solvent mixture of diacetone alcohol and propylene glycol monomethyl ether in a weight ratio of 20/80 to a total solids concentration of 10%, prior to coating.

Each of the curable compositions prepared above was applied by dip coating to a surface cleaned polycarbonate resin plate of 0.5 mm thick (Iupilon® sheet, Mitsubishi Engineering-Plastics Corp.) and heat cured at 120°C for 30 minutes to form a (cured) undercoat of about 6 to 8 µm thick. In some cases, a mixture of the colloidal silica-laden organopolysiloxane composition (HC-1 or 2) of Synthesis Example 6 or 7 and a UV absorber (UVA-4) and a light stabilizer (HALS-1) as additives was applied by dip coating to the undercoat and heat cured at 130°C for 1 hour to form a topcoat of about 4 to 5 µm thick. The coatings were evaluated for physical properties, with the results shown in Tables 2 and 3.

In respect of numerical ranges disclosed herein it will of course be understood that in the normal way the technical criterion for the upper limit is different from the technical criterion for the lower limit, i.e. the upper and lower limits are intrinsically distinct proposals.

**Table 2**

| Composition (as solids) and coating properties | | | | | |
|---|---|---|---|---|---|
| | | Example | | | |
| | | 1 | 2* | 3 | 4 |
| A) (Alkoxysilyl+UV absorbing groups)-containing vinyl polymer | | A-1 100 pbw | A-2 100 pbw | A-3 100 pbw | A-3 100 pbw |
| B) Organic UV absorber | | UVA-2 5 pbw | UVA-3 20 pbw | UVA-2 3 pbw | UVA-2 12 pbw |
| C) (N+alkoxysilyl)-containing organosilicon compound | | C-1 10 pbw | C-1 20 pbw | C-1 10 pbw | C-2 5 pbw |
| Thermoplastic resin | | | | Pol-C 40 pbw | |
| Additive | | | HALS-1 1 pbw | | |
| Colloidal silica-laden organopolysiloxane composition | | | HC-2 100 pbw | HC-1 100 pbw | HC-1 100 pbw |
| Additive | | | UVA-4 3 pbw | | UVA-1 2 pbw |
| Evaluation results | | | | | |
| Initial coating appearance | | intact | intact | intact | intact |
| Primary adhesion | | 25/25 | 25/25 | 25/25 | 25/25 |
| Water resistant appearance | | intact | intact | intact | intact |
| Water resistant adhesion | | 25/25 | 25/25 | 25/25 | 25/25 |
| Mar resistance (%) | | 18 | 2 | 2 | 3 |
| Weathering 250 hr | Yellowing index | <1 | <1 | <1 | <1 |
| | Cracks | ○ | ○ | ○ | ○ |
| | Separation | ○ | ○ | ○ | ○ |
| Weathering 500 hr | Yellowing index | 5 | 2 | 3 | 3 |
| | Cracks | ○ | ○ | ○ | ○ |
| | Separation | ○ | ○ | ○ | ○ |

| | | | | | |
|---|---|---|---|---|---|
| * not an embodiment of the present invention. | | | | | |

**Table 3**

| Composition (as solids) and coating properties | | | | | |
|---|---|---|---|---|---|
| | | Comparative Example | | | |
| | | 1 | 2 | 3 | 4 |
| A) (Alkoxysilyl+UV absorbing groups)-containing vinyl polymer | | RA-1 100 pbw | RA-2 100 pbw | | A-1 100 pbw |
| B) Organic UV absorber | | UVA-2 5 pbw | UVA-1 5 pbw | UVA-2 5 pbw | UVA-2 5 pbw |
| C) (N+alkoxysilyl)-containing organosilicon compound | | C-1 10 pbw | C-1 10 pbw | C-1 10 pbw | |
| Thermoplastic resin | | | | Pol-C 100 pbw | |
| Additive | | | | | |
| Colloidal silica-laden organopolysiloxane composition | | HC-1 100 pbw | HC-1 100 pbw | HC-1 100 pbw | HC-1 100 pbw |
| Additive | | | | | |
| Evaluation results | | | | | |
| Initial coating appearance | | intact | intact | intact | intact |
| Primary adhesion | | 25/25 | 25/25 | 25/25 | 25/25 |
| Water resistant appearance | | intact | intact | faintly white turbid | faintly white turbid |
| Water resistant adhesion | | 25/25 | 25/25 | 18/25 | 5/25 |
| Mar resistance (%) | | 3 | 2 | 5 | 3 |
| Weathering 250 hr | Yellowing index | 5 | 6 | 5 | 2 |
| | Cracks | ○ | ○ | Δ | ○ |
| | Separation | Δ2 | Δ1 | ×1 | ×1 |
| Weathering 500 hr | Yellowing index | 20 | 25 | 24 | 5 |
| | Cracks | Δ | Δ | × | Δ |
| | Separation | ×2 | ×1 | ×1, 2 | ×1, 2 |

## Claims

1. A curable composition comprising
(A) vinyl polymer having hydrolyzable silyl groups and/or SiOH groups and organic UV absorbing groups bonded to side chains,
(B) 2-[2-hydroxy-4-(1-octyloxycarbonylethoxy)phenyl]-4,6-bis(4-phenylphenyl)-1,3,5-triazine as organic UV absorber, and
(C) organosilicon compound containing a nitrogen atom and an alkoxysilyl group in the molecule.

2. The curable composition of claim 1, wherein said organic UV absorbing group in said vinyl polymer (A) contains an aromatic ring.

3. The curable composition of any one of claims 1 to 2, wherein said vinyl polymer (A) having hydrolyzable silyl groups and/or SiOH groups and organic UV absorbing groups bonded to side chains is obtained through copolymerization of monomeric components comprising (a) a vinyl monomer having a hydrolyzable silyl group and/or SiOH group bonded thereto through a C-Si bond, (b) a vinyl monomer having an organic UV absorbing group, and (c) another monomer copolymerizable therewith.

4. A curable composition according to claim 3, wherein the vinyl monomer (a) is selected from methacryloxymethyltrimethoxysilane, methacryloxypropyltrimethoxysilane, methacryloxyundecyltrimethoxysilane, methacryloxypropylmethyldimethoxysilane, methacryloxypropyldimethylmethoxysilane, methacryloxypropyltriethoxysilane, acryloxypropyltrimethoxysilane, acryloxypropylmethyldimethoxysilane, acryloxypropyldimethylmethoxysilane, acryloxypropyltriethoxysilane, acryloxymethyltrimethoxysilane, acryloxyundecyltrimethoxysilane, vinyltrimethoxysilane, vinyltriethoxysilane, vinylmethyldimethoxysilane, allyltrimethoxysilane, styryltrimethoxysilane, styrylmethyldimethoxysilane, and styryltriethoxysilane.

5. A curable composition according to claim 3 or claim 4, wherein the vinyl monomer (a) is present in an amount of between 1 to 50% by weight of the copolymer.

6. A curable composition according to any of claims 3 to 5, wherein the vinyl monomer (b) is selected from benzotriazole compounds of general formula (1) and benzophenone compounds of general formula (2):

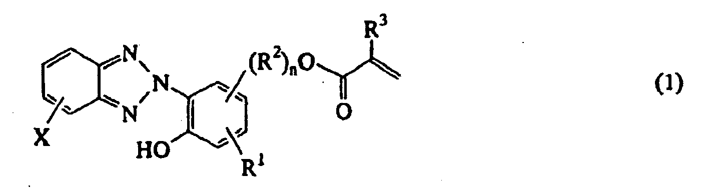

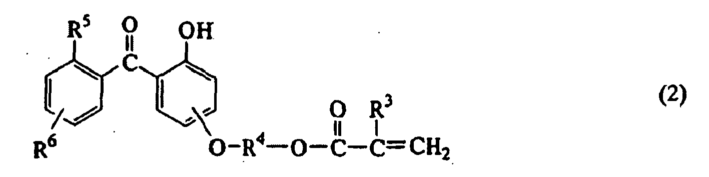

7. A curable composition according to any of claims 3 to 6, wherein the vinyl monomer (b) is used in an amount of 1 to 30% by weight of the copolymer.

8. A curable composition according to any of claims 3 to 7, wherein the other monomer (c) is selected from (meth)acrylic monomers having a cyclic hindered amine structure, (meth)acrylates, (meth)acrylonitriles, (meth)acrylamides, alkyl vinyl ethers, alkyl vinyl esters, and styrene.

9. A curable composition according to any one of claims 3 to 8, wherein the other monomer (c) is present in an amount from 20 to 98% by weight of the copolymer.

10. A curable composition according to any of the preceding claims, wherein the vinyl polymer (A) has a molecular weight of 1,000 to 300,000, as measured by gel permeation chromatography (GPC) versus polystyrene standards.

11. A curable composition according to any of the preceding claims, wherein the organosilicon compound (C) is selected from amino-containing alkoxysilane, amino-containing di(alkoxysilane), amide-containing alkoxysilane, amidated form of the reaction product of an amino-containing alkoxysilane with an epoxy-containing alkoxysilane and a silylating agent, reaction product of an amino-containing alkoxysilane with a dicarboxylic anhydride, reaction product of an amino-containing alkoxysilane with a (poly)(meth)acrylic compound, reaction product of an amino-containing alkoxysilane with a (meth)acrylic group-containing alkoxysilane, reaction product of a polyamine compound with a (meth)acrylic group-containing alkoxysilane, amidated form of the reaction product of an amino-containing alkoxysilane with a polyisocyanate compound, and (poly)silane compound containing an isocyanurate ring.

12. An article comprising a substrate and a coating formed thereon by coating the curable composition of any one of claims 1 to 11 and curing through siloxane crosslinking.

13. An article comprising a substrate, an undercoat formed on the substrate by coating and curing the curable composition of any one of claims 1 to 11, and a silicone hard coating disposed on the surface of the undercoat.

14. A method comprising the preparation of a composition according to any one of claims 1 to 11, by combining said components thereof.

15. A method comprising the preparation of an article according to claim 12 or 13, comprising applying and curing said composition.

## Patentansprüche

1. Härtbare Zusammensetzung, umfassend:
(A) ein Vinylpolymer mit hydrolysierbaren Silylgruppen und/oder SiOH-Gruppen und UV-absorbierenden organischen Gruppen, die an Seitenketten gebunden sind,
(B) 2-[2-Hydroxy-4-(1-octyloxycarbonylethoxy)phenyl]-4,6-bis(4-phenylphenyl)-1,3,5-triazin als organischen UV-Absorber und
(C) eine Organosiliciumverbindung, die ein Stickstoffatom und eine Alkoxysilylgruppe im Molekül enthält.

2. Härtbare Zusammensetzung nach Anspruch 1, worin die UV-absorbierende organische Gruppe in dem Vinylpolymer (A) einen aromatischen Ring enthält.

3. Härtbare Zusammensetzung nach einem der Ansprüche 1 bis 2, worin das Vinylpolymer (A) mit hydrolysierbaren Silylgruppen und/oder SiOH-Gruppen und UV-absorbierenden organischen Gruppen, die an Seitenketten gebunden sind, durch die Copolymerisierung von monomeren Komponenten erhalten wird, die (a) ein Vinylmonomer mit einer hydrolysierbaren Silylgruppe und/oder SiOH-Gruppe, die über eine C-Si-Bindung daran gebunden ist, (b) ein Vinylmonomer mit einer UV-absorbierenden organischen Gruppe und (c) ein weiteres mit diesen copolymerisierbares Monomer umfassen.

4. Härtbare Zusammensetzung nach Anspruch 3, worin das Vinylmonomer (a) aus folgenden ausgewählt ist: Methacryloxymethyltrimethoxysilan, Methacryloxypropyltrimethoxysilan, Methacryloxyundecyltrimethoxysilan, Methacryloxypropylmethyldimethoxysilan, Methacryloxypropyldimethylmethoxysilan, Methacryloxypropyltriethoxysilan, Acryloxypropyltrimethoxysilan, Acryloxypropylmethyldimethoxysilan, Acryloxypropyldimethylmethoxysilan, Acryloxypropyltriethoxysilan, Acryloxymethyltrimethoxysilan, Acryloxyundecyltrimethoxysilan, Vinyltrimethoxysilan, Vinyltriethoxysilan, Vinylmethyldimethoxysilan, Allyltrimethoxysilan, Styryltrimethoxysilan, Styrylmethyldimethoxysilan und Styryltriethoxysilan.

5. Härtbare Zusammensetzung nach Anspruch 3 oder 4, worin das Vinylmonomer (a) in einer Menge von 1 bis 50 Gew.-% des Copolymers vorhanden ist.

6. Härtbare Zusammensetzung nach einem der Ansprüche 3 bis 5, worin das Vinylmonomer (b) aus Benzotriazolverbindungen der allgemeinen Formel (1) und Benzophenonverbindungen der allgemeine Formel (2) ausgewählt ist:

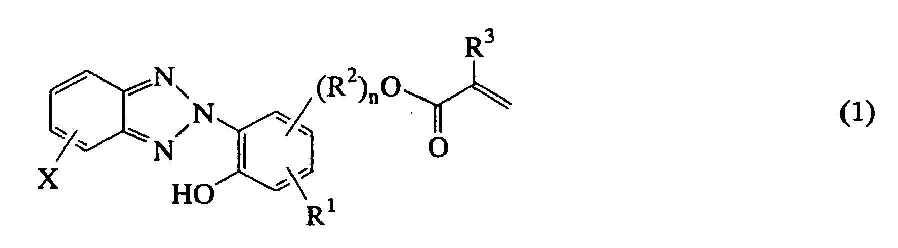

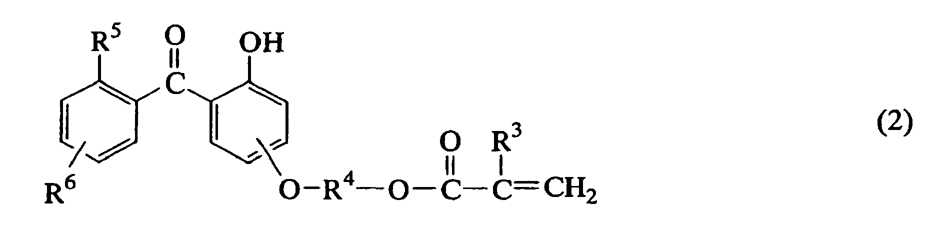

7. Härtbare Zusammensetzung nach einem der Ansprüche 3 bis 6, worin das Vinylmonomer (b) in einer Menge von 1 bis 30 Gew.-% des Copolymers verwendet wird.

8. Härtbare Zusammensetzung nach einem der Ansprüche 3 bis 7, worin das andere Monomer (c) aus (Meth)acrylmonomeren mit einer zyklischen, sterisch gehinderten Aminstruktur, (Meth)acrylaten, (Meth)acrylnitrilen, (Meth)acrylamiden, Alkylvinylethern, Alkylvinylestern und Styrol ausgewählt ist.

9. Härtbare Zusammensetzung nach einem der Ansprüche 3 bis 8, worin das andere Monomer (c) in einer Menge von 20 bis 98 Gew.-% des Copolymers vorhanden ist.

10. Härtbare Zusammensetzung nach einem der vorangegangenen Ansprüche, worin das Vinylpolymer (A) ein mittels Gelpermeationschromatographie (GPC) im Vergleich mit Polystyrolstandards ermitteltes Molekulargewicht von 1.000 bis 300.000 aufweist.

11. Härtbare Zusammensetzung nach einem der vorangegangenen Ansprüche, worin die Organosiliciumverbindung (C) aus folgenden ausgewählt ist: aminohältigem Alkoxysilan, aminohältigem Di(alkoxysilan), amidhältigem Alkoxysilan, einer amidierten Form des Reaktionsprodukts eines aminohältigen Alkoxysilans und eines epoxyhältigen Alkoxysilans und eines Silylierungsmittels, dem Reaktionsprodukt eines aminohältigen Alkoxysilans und eines Dicarbonsäureanhydrids, dem Reaktionsprodukt eines aminohältigen Alkoxysilans und einer (Poly)(meth)acrylverbindung, dem Reaktionsprodukt eines aminohältigen Alkoxysilans und eines (meth)acrylgruppenhältigen Alkoxysilans, dem Reaktionsprodukt einer Polyaminverbindung und eines (meth)-acrylgruppenhältigen Alkoxysilans, der amidierten Form des Reaktionsprodukts eines aminohältigen Alkoxysilans und einer Polyisocyanatverbindung, und einer (Poly)silanverbindung, die einen Isocyanuratring enthält.

12. Gegenstand, umfassend ein Substrat und eine darauf durch Beschichten der härtbaren Zusammensetzung nach einem der Ansprüche 1 bis 11 und das Härten mittels Siloxanvernetzung ausgebildete Beschichtung.

13. Gegenstand, umfassend ein Substrat, eine darauf durch das Beschichten und Härten der härtbaren Zusammensetzung nach einem der Ansprüche 1 bis 11 ausgebildeten Grundierung und eine Siliconhartbeschichtung, die auf der Oberfläche der Grundierung aufgebracht ist.

14. Verfahren, umfassend die Herstellung einer Zusammensetzung nach einem der Ansprüche 1 bis 11 durch das Kombinieren ihrer Komponenten.

15. Verfahren, umfassend die Herstellung eines Gegenstands nach Anspruch 12 oder 13, umfassend das Aufbringen und Härten der Zusammensetzung.

## Revendications

1. Composition vulcanisable comprenant
(A) un polymère de vinyle comportant des groupes silyle hydrolysables et/ou des groupes SiOH et des groupes organiques absorbant les UV liés aux chaînes latérales,
(B) de la 2-[2-hydroxy-4-(1-octyloxycarbonyléthoxy)phényl]-4,6-bis(4-phénylphényl)-1,3,5-triazine en tant qu'agent organique absorbant les UV, et
(C) un composé organosilicium contenant un atome d'azote et un groupe alcoxysilyle dans la molécule.

2. Composition vulcanisable selon la revendication 1, dans laquelle ledit groupe organique absorbant les UV dans ledit polymère de vinyle (A) contient un cycle aromatique.

3. Composition vulcanisable selon l'une quelconque des revendications 1 et 2, dans laquelle ledit polymère de vinyle (A) comportant des groupes silyle hydrolysables et/ou des groupes SiOH et des groupes organiques absorbant les UV liés aux chaînes latérales est obtenu par copolymérisation de composants monomères comprenant (a) un monomère de vinyle comportant un groupe silyle hydrolysable et/ou un groupe SiOH qui lui est lié par une liaison C-Si, (b) un monomère de vinyle comportant un groupe organique absorbant les UV, et (c) un autre monomère copolymérisable avec eux.

4. Composition vulcanisable selon la revendication 3, dans laquelle le monomère de vinyle (a) est choisi parmi
le méthacryloxyméthyltriméthoxysilane,
le méthacryloxypropyltriméthoxysilane,
le méthacryloxyundécyltriméthoxysilane,
le méthacryloxypropylméthyldiméthoxysilane,
le méthacryloxypropyldiméthylméthoxysilane,
le méthacryloxypropyltriéthoxysilane,
l'acryloxypropyltriméthoxysilane,
l'acryloxypropylméthyldiméthoxysilane,
l'acryloxypropyldiméthylméthoxysilane,
l'acryloxypropyltriéthoxysilane,
l'acryloxyméthyltriméthoxysilane,
l'acryloxyundécyltriméthoxysilane, le vinyltriméthoxysilane, le vinyltriéthoxysilane, le vinylméthyldiméthoxysilane, l'allyltriméthoxysilane, le styryltriméthoxysilane, le styrylméthyldiméthoxysilane et le styryltriéthoxysilane.

5. Composition vulcanisable selon la revendication 3 ou la revendication 4, dans laquelle le monomère de vinyle (a) est présent en une quantité entre 1 et 50 % en poids du copolymère.

6. Composition vulcanisable selon l'une quelconque des revendications 3 à 5, dans laquelle le monomère de vinyle (b) est choisi parmi les composés benzotriazole de formule générale (1) et les composés benzophénone de formule générale (2) :

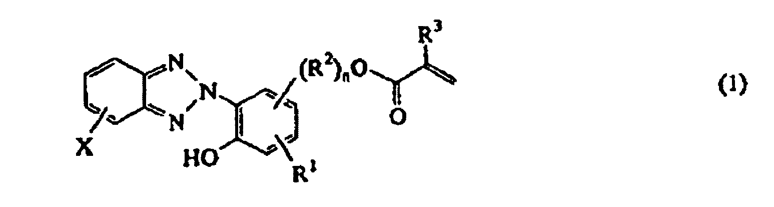

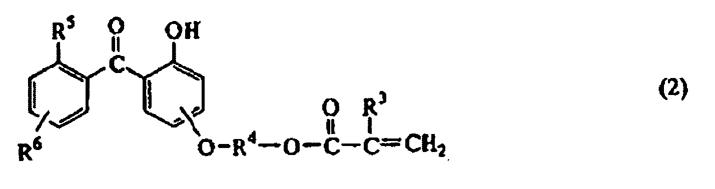

7. Composition vulcanisable selon l'une quelconque des revendications 3 à 6, dans laquelle le monomère de vinyle (b) est utilisé en une quantité de 1 à 30 % en poids du copolymère.

8. Composition vulcanisable selon l'une quelconque des revendications 3 à 7, dans laquelle l'autre monomère (c) est choisi parmi les monomères (méth)acryliques ayant une structure d'amine encombrée cyclique, les (méth)acrylates, les (méth)acrylonitriles, les (méth)acrylamides, les alkyl vinyl éthers, les esters d'alkyl vinyle et le styrène.

9. Composition vulcanisable selon l'une quelconque des revendications 3 à 8, dans laquelle l'autre monomère (c) est présent en une quantité de 20 à 98 % en poids du copolymère.

10. Composition vulcanisable selon l'une quelconque des revendications précédentes, dans laquelle le polymère de vinyle (A) a une masse moléculaire de 1 000 à 300 000, telle que mesurée par chromatographie par perméation de gel (GPC) par rapport à des étalons de poly(styrène).

11. Composition vulcanisable selon l'une quelconque des revendications précédentes, dans laquelle le composé organosilicium (C) est choisi parmi un alcoxysilane contenant un amino, un di (alcoxysilane) contenant un amino, un alcoxysilane contenant un amide, une forme amidée du produit de réaction d'un alcoxysilane contenant un amino avec un alcoxysilane contenant un époxy et un agent de silylation, un produit de réaction d'un alcoxysilane contenant un amino avec un anhydride dicarboxylique, un produit de réaction d'un alcoxysilane contenant un amino avec un composé (poly)(méth)acrylique, un produit de réaction d'un alcoxysilane contenant un amino avec un alcoxysilane contenant un groupe (méth)acrylique, un produit de réaction d'un composé poly(amine) avec un alcoxysilane contenant un groupe (méth)acrylique, une forme amidée du produit de réaction d'un alcoxysilane contenant un amino avec un composé poly(isocyanate), et un composé (poly)silane contenant un cycle isocyanurate.

12. Article comprenant un substrat sur lequel est formé un revêtement par revêtement de la composition vulcanisable de l'une quelconque des revendications 1 à 11 et vulcanisation par réticulation de siloxane.

13. Article comprenant un substrat, une sous-couche formée sur le substrat par revêtement et vulcanisation de la composition vulcanisable de l'une quelconque des revendications 1 à 11, et un revêtement dur en silicone disposé sur la surface de la sous-couche.

14. Procédé comprenant la préparation d'une composition selon l'une quelconque des revendications 1 à 11, par combinaison desdits composants de celle-ci.

15. Procédé comprenant la préparation d'un article selon la revendication 12 ou 13, comprenant l'application et la vulcanisation de ladite composition.
